# EUROPÄISCHE PATENTANMELDUNG

(11) **EP 2 868 437 A1**
(43) Veröffentlichungstag der Anmeldung: **06.05.2015**
(21) Anmeldenummer: 13190634.9
(22) Anmeldetag: 29.10.2013
(51) Int. Cl.: B25F 5/00

(54) **Handgeführtes oder halbstationäres Werkzeuggerät oder Arbeitsgerät**

(71) Anmelder: HILTI Aktiengesellschaft, 9494 Schaan (LI)
(72) Erfinder: Gerold, Uwe, 88131 Lindau (DE); Barrafon Gomez, Marc, 9463 Oberriet (CH); Welte, Norbert, 6833 Klaus (AT); Grazioli, Mario, 7000 Chur (CH)
(74) Vertreter: Hilti Aktiengesellschaft Corporate Intellectual Property

(57) **Zusammenfassung**

Die Erfindung betrifft ein handgeführtes oder halbstationäres Werkzeuggerät oder Arbeitsgerät, mit einem Gehäuse, in welchem mindestens eine mechanische Betätigungseinrichtung angeordnet ist, die im Betrieb des Werkzeuggeräts oder Arbeitsgeräts Geräusche, zum Beispiel in Form von Körperschall, abgibt.

Um den Betrieb von handgeführten oder halbstationären Werkzeuggeräten oder Arbeitsgeräten weiter zu vereinfachen und/oder deren Serviceintervalle oder Lebensdauer zu verlängern, umfasst das Werkzeuggerät oder Arbeitsgerät (1) mindestens eine Einrichtung (20) zum Erfassen von im Betrieb des Werkzeuggeräts oder Arbeitsgeräts (1) auftretenden Geräuschen.

## Beschreibung

### Technisches Gebiet

Die Erfindung betrifft ein handgeführtes oder halbstationäres Werkzeuggerät oder Arbeitsgerät, mit einem Gehäuse, in welchem mindestens eine mechanische Betätigungseinrichtung angeordnet ist, die im Betrieb des Werkzeuggeräts oder Arbeitsgeräts Geräusche, zum Beispiel in Form von Körperschall, abgibt. Die Erfindung betrifft des Weiteren ein Verfahren zum Betreiben eines derartigen Werkzeuggeräts oder Arbeitsgeräts.

### Stand der Technik

Bei dem Handwerkzeuggerät handelt es sich zum Beispiel um ein handgeführtes Eintreibgerät, wie es in den deutschen Offenlegungsschriften DE 10 2006 000 517 A1 und DE 10 2006 035 460 A1 offenbart ist. Bei dem Handwerkzeug oder Arbeitsgerät kann es sich aber auch um ein Handgerät handeln, wie es in der deutschen Patentschrift DE 33 10 371 C1 offenbart ist.

Aus der deutschen Offenlegungsschrift DE 101 56 218 A1 ist ein handgeführtes oder halbstationäres Elektrowerkzeug mit einer Einrichtung zur Speicherung maschinenbezogener Daten und mit einer Einrichtung zur Erfassung von Belastungszuständen während des Betriebs des Elektrowerkzeuggeräts und zur Umwandlung der bestimmten Belastungszustände in der Speichereinrichtung speicherbare Belastungsdaten bekannt, wobei eine interne oder externe prozessorgesteuerte Einrichtung zur Verarbeitung der Belastungsdaten, zur Gewinnung einer Servicevorhersage und einer Vorhersage über die verbleibende störungsfreie Betriebsdauer oder zur Ausgabe einer Störungsmeldung dient.

### Darstellung der Erfindung

Aufgabe der Erfindung ist es, den Betrieb von handgeführten oder halbstationären Werkzeuggeräten oder Arbeitsgeräten weiter zu vereinfachen und/oder deren Serviceintervalle oder Lebensdauer zu verlängern.

Die Aufgabe ist bei einem handgeführten oder halbstationären Werkzeuggerät oder Arbeitsgerät, mit einem Gehäuse, in welchem mindestens eine mechanische Betätigungseinrichtung angeordnet ist, die im Betrieb des Werkzeuggeräts oder Arbeitsgeräts Geräusche, zum Beispiel in Form von Körperschall, abgibt, dadurch gelöst, dass das Werkzeuggerät mindestens eine Einrichtung zum Erfassen von im Betrieb des Werkzeuggeräts oder Arbeitsgeräts auftretenden Geräuschen umfasst. Gemäß einem wesentlichen Aspekt der Erfindung wird eine akustische Überwachung des handgeführten oder halbstationären Werkzeuggeräts oder Arbeitsgeräts ermöglicht, indem an mindestens einer ausgewählten Stelle Geräusche, insbesondere Schallsignale, erfasst werden. Dadurch können unabhängig von einem Anwender beginnende Schädigungen von Gerätekomponenten zuverlässig erkannt werden.

Ein bevorzugtes Ausführungsbeispiel des handgeführten oder halbstationären Werkzeuggeräts oder Arbeitsgeräts ist dadurch gekennzeichnet, dass die Einrichtung zum Erfassen von im Betrieb des Werkzeuggeräts oder Arbeitsgeräts auftretenden Geräuschen mindestens ein Mikrofon umfasst. Bei dem Mikrofon handelt es sich vorzugsweise um ein relativ kleines Bauteil, das problemlos in einem bestehenden Gehäuse des handgeführten oder halbstationären Werkzeuggeräts oder Arbeitsgeräts untergebracht werden kann.

Ein weiteres bevorzugtes Ausführungsbeispiel des handgeführten oder halbstationären Werkzeuggeräts oder Arbeitsgeräts ist dadurch gekennzeichnet, dass die Einrichtung zum Erfassen von im Betrieb des Werkzeuggeräts oder Arbeitsgeräts auftretenden Geräuschen mindestens einen Kraftsensor und/oder einen Schwingungssensor und/oder einen Dehnungssensor umfasst. Der Kraftsensor und/oder der Schwingungssensor und/oder der Dehnungssensor sind/ist vorteilhaft so in oder an dem Gehäuse angeordnet, dass die Geräusche, insbesondere Schallsignale, unmittelbar oder in der Nähe ihres Entstehungsorts erfasst werden. Dadurch können auch kleinere Veränderungen, insbesondere von Betriebsgeräuschen, schnell und sicher erfasst werden.

Ein weiteres bevorzugtes Ausführungsbeispiel des handgeführten oder halbstationären Werkzeuggeräts oder Arbeitsgeräts ist dadurch gekennzeichnet, dass mehrere Einrichtungen zum Erfassen von im Betrieb des Werkzeuggeräts oder Arbeitsgeräts auftretenden Geräuschen an unterschiedlichen Stellen in oder an dem Gehäuse vorgesehen sind. Die unterschiedlichen Stellen können zum Beispiel mit Hilfe von relativ einfachen Messungen im Betrieb des handgeführten oder halbstationären Werkzeuggeräts oder Arbeitsgeräts ermittelt werden.

Ein weiteres bevorzugtes Ausführungsbeispiel des handgeführten oder halbstationären Werkzeuggeräts oder Arbeitsgeräts ist dadurch gekennzeichnet, dass eine Einrichtung zum Erfassen von im Betrieb des Werkzeuggeräts oder Arbeitsgeräts auftretenden Geräuschen in einem vorderen/hinteren Endbereich des Werkzeuggeräts oder Arbeitsgeräts angeordnet ist. Bei dem Werkzeuggerät oder Arbeitsgerät handelt es sich zum Beispiel um ein Bolzensetzgerät. Ein Bolzensetzgerät umfasst zum Beispiel einen mechanischen Stößel, der in einem hinteren Endbereich des Bolzensetzgeräts stoßartig mit einer relativ großen Kraft beaufschlagt wird. Der Stößel gibt die Kraft beziehungsweise Beschleunigung im vorderen Endbereich des Bolzensetzgeräts an einen Bolzen oder Nagel ab, der mit Hilfe des Stößels an einem Bolzensetzende des Bolzensetzgeräts austritt und in einen Untergrund eingetrieben wird.

Ein weiteres bevorzugtes Ausführungsbeispiel des handgeführten oder halbstationären Werkzeuggeräts oder Arbeitsgeräts ist dadurch gekennzeichnet, dass das Werkzeuggerät oder Arbeitsgerät als Nagelgerät, handgeführtes Eintreibgerät oder Bolzensetzgerät ausgeführt ist. Bei dem Bolzensetzgerät kann es sich um ein brennkraftbetriebenes, ein pneumatisches oder ein elektrisch angetriebenes Bolzensetzgerät handeln.

Bei einem Verfahren zum Betreiben eines vorab beschriebenen handgeführten oder halbstationären Werkzeuggeräts oder Arbeitsgeräts ist die oben angegebene Aufgabe alternativ oder zusätzlich dadurch gelöst, dass die mit der Einrichtung im Betrieb des Werkzeuggeräts oder Arbeitsgeräts erfassten Geräusche ausgewertet und verwendet werden, um zum Beispiel Schädigungen von Gerätekomponenten zu erkennen. Dadurch können unerwünschte Folgeschäden verhindert werden.

Ein bevorzugtes Ausführungsbeispiel des Verfahrens ist dadurch gekennzeichnet, dass mehrere Gerätekomponenten gleichzeitig überwacht werden. Mit einem Mikrofon können vorteilhaft mehrere Gerätekomponenten überwacht werden, die im Betrieb des Werkzeuggeräts oder Arbeitsgeräts unterschiedliche Geräusche erzeugen.

Ein weiteres bevorzugtes Ausführungsbeispiel des Verfahrens ist dadurch gekennzeichnet, dass einem Benutzer im Betrieb des Werkzeuggeräts oder Arbeitsgeräts Informationen über eine Störung im Betrieb des Werkzeuggeräts oder Arbeitsgeräts sofort angezeigt werden. Die entsprechenden Informationen werden vorteilhaft optisch angezeigt. Eine entsprechende Anzeigeeinrichtung ist zum Beispiel außen am Gehäuse des Arbeitsgeräts oder Werkzeuggeräts angebracht.

Ein weiteres bevorzugtes Ausführungsbeispiel des Verfahrens ist dadurch gekennzeichnet, dass das Werkzeuggerät deaktiviert wird, wenn im Betrieb des Werkzeuggeräts oder Arbeitsgeräts eine signifikante Störung erkannt wird. Dadurch wird auf einfache Art und Weise verhindert, dass ein Werkzeuggerät oder Arbeitsgerät nach dem Auftreten einer Störung weiter verwendet wird.

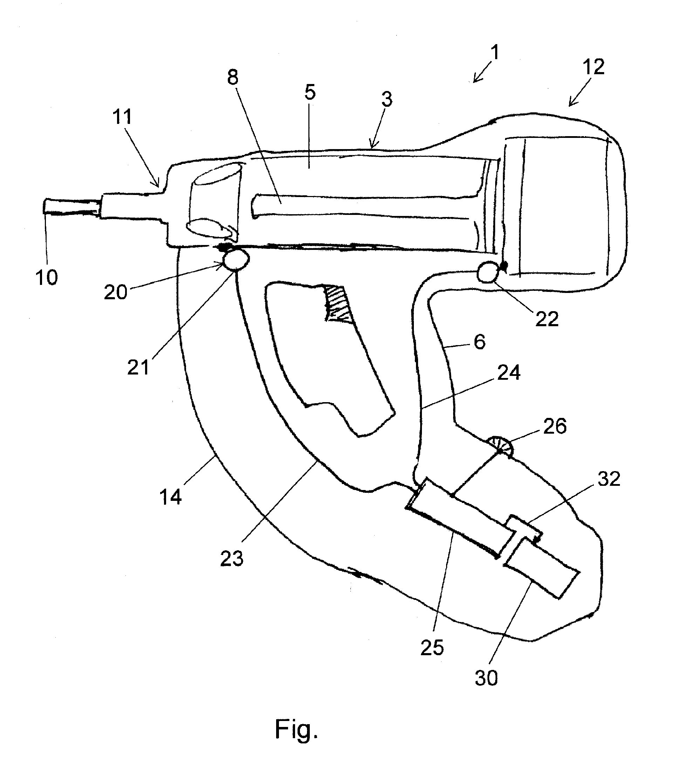

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Die einzige beiliegende Figur zeigt eine vereinfachte Darstellung eines erfindungsgemäßen Werkzeuggeräts oder Arbeitsgeräts im Längsschnitt.

### Ausführungsbeispiele

In der einzigen beiliegenden Figur ist ein erfindungsgemäßes Arbeitsgerät oder Werkzeuggerät 1 mit einem Gehäuse 5 und einem Handgriff 6 vereinfacht im Längsschnitt dargestellt. Bei dem Werkzeuggerät oder Arbeitsgerät 1 handelt es sich um ein elektrisch angetriebenes Bolzensetzgerät 3. Die Erfindung ist aber auch auf brennkraftbetriebene oder pneumatische Bolzensetzgeräte anwendbar. Darüber hinaus ist die Erfindung in anderen Werkzeuggeräten oder Arbeitsgeräten, wie Bohrmaschinen, einsetzbar.

Das Bolzensetzgerät 3 dient zum Eintreiben von Befestigungselementen in einen (nicht dargestellten) Untergrund. Die Befestigungselemente werden in dem Gehäuse 5 mit Hilfe einer mechanischen Betätigungseinrichtung 8 durch einen mechanischen Stößel mit einer relativ großen Kraft beaufschlagt und beschleunigt. Die so mit Kraft und Beschleunigung beaufschlagten Befestigungselemente treten an einem Setzende 10 aus dem Gehäuse 5 aus.

Die verwendeten Befestigungselemente werden über ein geräteinternes Magazin 14 bereitgestellt, das in der Nähe des Setzendes 10 des Werkzeuggeräts oder Arbeitsgeräts 1 angebracht ist. Aus dem Magazin 14 werden die Befestigungselemente, vorzugsweise einzeln, automatisch entnommen und am Setzende 10 bereitgestellt.

Die zum Eintreiben der Befestigungselemente in den Untergrund benötigte Energie wird über die mechanische Betätigungseinrichtung 8 in einem vorderen Bereich 11 des Gehäuses 5 an das jeweilige Befestigungselement abgegeben. In einem hinteren Bereich 12 des Gehäuses 5 wird die zum Eintreiben der Befestigungselemente in den Untergrund benötigte Energie zum Beispiel elektrisch bereitgestellt.

Alternativ kann die zum Eintreiben der Befestigungselemente in den Untergrund benötigte Energie in dem hinteren Bereich 12 auch in einem Brennstoffbehälter bereitgestellt werden. Darüber hinaus kann die zum Eintreiben der Befestigungselemente in den Untergrund benötigte Energie pneumatisch bereitgestellt werden.

Das erfindungsgemäße Werkzeuggerät oder Arbeitsgerät 1 umfasst eine Einrichtung 20 zum Erfassen von im Betrieb des Werkzeuggeräts oder Arbeitsgeräts 1 auftretenden Geräuschen, zum Beispiel in Form von Körperschall. Die Geräuscherfassungseinrichtung 20 umfasst ein Mikrofon 21 und ein Mikrofon 22.

Das Mikrofon 21 ist im vorderen Bereich 11 des Bolzensetzgeräts 3 angeordnet. Dabei ist das Mikrofon 21 in der Nähe eines vorderen Endes eines Stößels der mechanischen Betätigungseinrichtung 8 angeordnet. Das Mikrofon 22 ist im hinteren Bereich 12 des Bolzensetzgeräts 3 angeordnet. Dabei ist das Mikrofon 22 in der Nähe eines hinteren Endes des Stößels der mechanischen Betätigungseinrichtung 8 angeordnet.

Das Mikrofon 21 ist über eine Leitung 23 an eine Auswerteeinheit 25 angeschlossen. Das Mikrofon 22 ist über eine Leitung 24 an die Auswerteeinheit 25 angeschlossen. Mit den Mikrofonen 21 und 22 werden im vorderen Bereich 11 und im hinteren Bereich 12 des Bolzensetzgeräts 3 Schallsignale erfasst. Die Auswertung dieser Schallsignale erfolgt in der zentralen Auswerteeinheit 25.

Die zentrale Auswerteeinheit 25 ist zusammen mit einer Steuerung 30 in einem unteren Ende des Handgriffs 6 des Bolzensetzgeräts 3 untergebracht. Die Auswerteeinheit 25 wird mit einer Software betrieben, die geräteabhängig fest vorgegeben ist. Über die Software erfolgt eine Festlegung der für die Funktion erforderlichen Parameter für einen bestimmten Gerätetyp. Das liefert den Vorteil, dass eine individuelle Trainingsphase für den jeweiligen Gerätetyp entfallen kann.

Über die Auswerteeinheit 25 kann mit Hilfe der von den Mikrofonen 21 und 22 bereitgestellten Schallsignale eine Störung im Betrieb des Bolzensetzgeräts 3 erkannt werden. Die erkannte Störung wird einem Benutzer des Bolzensetzgeräts 3 unmittelbar über eine Anzeigeeinrichtung 26 optisch angezeigt. Die Information, dass eine Störung vorliegt, kann dem Benutzer alternativ oder zusätzlich auch akustisch übermittelt werden, zum Beispiel über geeignete Warntöne. Die Anzeigeeinrichtung 26 ist über eine Leitung an die zentrale Auswerteeinheit 25 angeschlossen.

Über eine Signalleitung 32 ist die Steuerung 30 ebenfalls an die Auswerteeinheit 25 angeschlossen. Über die Signalleitung 32 und die Steuerung 30 kann das Bolzensetzgerät 3 bei einer signifikanten Störung auch automatisch deaktiviert werden. Dadurch wird auf einfache Art und Weise verhindert, dass das Bolzensetzgerät 3 weiter benutzt wird, wenn eine signifikante Störung vorliegt.

Die Erfindung liefert unter anderem den Vorteil, dass der benötigte Schaltungsaufwand relativ gering ist. Demzufolge kann die zentrale Auswerteeinheit 25 sehr klein ausgeführt werden. Die geringen Abmessungen der Auswerteeinheit 25 ermöglichen auf einfache Art und Weise eine Integration in das Gehäuse 5. Dabei kann vorteilhaft auf zusätzliche externe Module oder Anschlusskabel verzichtet werden. Ein entsprechendes Auswerteprogramm ermöglicht eine zuverlässige Differenzierung von Unterschieden in der Handhabung und echten oder signifikanten Störungen im Betrieb des Bolzensetzgeräts 3.

## Patentansprüche

1. Handgeführtes oder halbstationäres Werkzeuggerät oder Arbeitsgerät (1), mit einem Gehäuse (5), in welchem mindestens eine mechanische Betätigungseinrichtung (8) angeordnet ist, die im Betrieb des Werkzeuggeräts oder Arbeitsgeräts (1) Geräusche, zum Beispiel in Form von Körperschall, abgibt, **dadurch gekennzeichnet, dass** das Werkzeuggerät oder Arbeitsgerät (1) mindestens eine Einrichtung (20) zum Erfassen von im Betrieb des Werkzeuggeräts oder Arbeitsgeräts (1) auftretenden Geräuschen umfasst.

2. Handgeführtes oder halbstationäres Werkzeuggerät oder Arbeitsgerät nach Anspruch 1, **dadurch gekennzeichnet, dass** die die Einrichtung (20) zum Erfassen von im Betrieb des Werkzeuggeräts oder Arbeitsgeräts (1) auftretenden Geräuschen mindestens einen Kraftsensor und/oder einen Schwingungssensor und/oder einen Dehnungssensor umfasst.

3. Handgeführtes oder halbstationäres Werkzeuggerät oder Arbeitsgerät nach einem der vorhergehenden Ansprüche, **dadurch gekennzeichnet, dass** Einrichtung (20) zum Erfassen von im Betrieb des Werkzeuggeräts oder Arbeitsgeräts (1) auftretenden Geräuschen mindestens ein Mikrofon (21,22) umfasst.

4. Handgeführtes oder halbstationäres Werkzeuggerät oder Arbeitsgerät nach einem der vorhergehenden Ansprüche, **dadurch gekennzeichnet, dass** mehrere Einrichtungen (20) zum Erfassen von im Betrieb des Werkzeuggeräts oder Arbeitsgeräts (1) auftretenden Geräuschen an unterschiedlichen Stellen in oder an dem Gehäuse (5) vorgesehen sind.

5. Handgeführtes oder halbstationäres Werkzeuggerät oder Arbeitsgerät nach einem der vorhergehenden Ansprüche, **dadurch gekennzeichnet, dass** eine Einrichtung (20) zum Erfassen von im Betrieb des Werkzeuggeräts oder Arbeitsgeräts (1) auftretenden Geräuschen in einem vorderen/hinteren Endbereich (11,12) des Werkzeuggeräts oder Arbeitsgeräts (1) angeordnet ist.

6. Handgeführtes oder halbstationäres Werkzeuggerät oder Arbeitsgerät nach einem der vorhergehenden Ansprüche, **dadurch gekennzeichnet, dass** das Werkzeuggerät oder Arbeitsgerät (1) als Nagelgerät, handgeführtes Eintreibgerät oder Bolzensetzgerät ausgeführt ist.

7. Verfahren zum Betreiben eines handgeführten oder halbstationären Werkzeuggeräts oder Arbeitsgeräts (1) nach einem der vorhergehenden Ansprüche **dadurch gekennzeichnet, dass** die mit der Einrichtung (20) im Betrieb des Werkzeuggeräts oder Arbeitsgeräts (1) erfassten Geräusche ausgewertet und verwendet werden, um zum Beispiel Schädigungen von Gerätekomponenten zu erkennen.

8. Verfahren nach Anspruch 7, **dadurch gekennzeichnet, dass** mehrere Gerätekomponenten gleichzeitig überwacht werden.

9. Verfahren nach Anspruch 7 oder 8, **dadurch gekennzeichnet, dass** einem Benutzer im Betrieb des Werkzeuggeräts oder Arbeitsgeräts (1) Informationen über eine Störung im Betrieb des Werkzeuggeräts oder Arbeitsgeräts (1) sofort angezeigt werden.

10. Verfahren nach einem der Ansprüche 7 bis 9, **dadurch gekennzeichnet, dass** das Werkzeuggerät oder Arbeitsgerät (1) deaktiviert wird, wenn im Betrieb des Werkzeuggeräts oder Arbeitsgeräts (1) eine signifikante Störung erkannt wird.
